# EUROPÄISCHE PATENTANMELDUNG

(11) **EP 2 863 371 A1**
(43) Veröffentlichungstag der Anmeldung: **22.04.2015**
(21) Anmeldenummer: 14178681.4
(22) Anmeldetag: 28.07.2014
(51) Int. Cl.: G08B 13/196, H04N 5/225

(54) **Überwachungskamera sowie zugehöriges Verfahren zum Bearbeiten von Bildaufnahmen der Überwachungskamera**

(30) Priorität: 05.09.2013 EP 13183136
(71) Anmelder: Siemens Convergence Creators GmbH, 1210 Wien (AT)
(72) Erfinder: Halla, Markus, 1210 Wien (AT)
(74) Vertreter: Maier, Daniel Oliver

(57) **Zusammenfassung**

Die vorliegende Erfindung betrifft eine Überwachungskamera (UK) für einen Einsatz in einem Flugzeug, wobei von der Überwachungskamera (UK) ein großer, vorgegebener Überwachungsbereich bei unterschiedlichen Beleuchtungsverhältnissen überwacht und aufgenommen wird (1). Die Überwachungskamera (UK) umfasst zumindest ein Objektiv (OB) mit einem großem Bildwinkel, einer Bildsensoreinheit (BE) für elektronische Bildaufnahmen des Überwachungsbereichs, eine Infrarotbeleuchtung (IB) sowie eine Verarbeitungseinheit (VE) zur automatisierten Bildverarbeitung von Bildaufnahmen der Überwachungskamera. Die Infrarotbeleuchtung (IB) besteht dabei aus Infrarot-Leuchtdioden, welche ohne Einschränkung des Bildwinkels des Objektivs (OB) um dieses Objektiv (OB) angeordnet sind, und aus einer Steuerung zur Einstellung einer Strahlungsintensität der Infrarot-Leuchtdioden. Weiterhin betrifft die gegenständliche Erfindung ein zur Überwachungskamera (UK) gehörendes Verfahren zur automatisierten Bildverarbeitung von Bildaufnahmen der Überwachungskamera, welches unmittelbar in der Verarbeitungseinheit durchgeführt wird (1). Dabei wird eine Bildaufnahme in ein sphärisches Panoramabild projiziert (2) und daraus mit Hilfe von Konfigurationsdaten zumindest ein Zielbild aus einem geringeren Bildwinkel errechnet (3) und auf im Flugzeug verfügbaren Anzeigeeinheiten ausgegeben (4). Die Überwachungskamera (UK) ist flexibel für unterschiedliche zu überwachende Bereiche in einem Flugzeug einsetzbar und es können mit der Überwachungskamera (UK) und dem zugehörigen Verfahren zum Bearbeiten von Bildaufnahmen optische gute Aufnahmen mit möglichst geringer Verzerrung geliefert werden.

## Beschreibung

### Technisches Gebiet

Die Erfindung betrifft allgemein das Gebiet der Sicherheitstechnik für Flugzeuge. Im Speziellen bezieht sich die vorliegende Erfindung auf eine Überwachungskamera für einen Einsatz in einem Flugzeug, wobei von der Überwachungskamera ein großer, vorgegebener Überwachungsbereich (z.B. Eingangsbereich des Flugzeugs, Bereich vor der Cockpittüre, etc.) bei unterschiedlichen Beleuchtungsverhältnissen überwacht und aufgenommen wird. Weiterhin betrifft die gegenständliche Erfindung ein zur Überwachungskamera gehörendes Verfahren zur automatisierten Bildverarbeitung von Bildaufnahmen der Überwachungskamera.

### Stand der Technik

Überwachungseinrichtungen, wie z.B. Überwachungskameras, finden auf allen sicherheitsrelevanten Gebieten eine weit verbreitete Anwendung. Häufig werden Überwachungskameras auch zur Überwachung von sicherheitsrelevanten Bereichen in Passagierflugzeugen (z.B. Passagierkabine, Bereiche bei den Flugzeugtüren, Cockpittüre und zugehöriger Bereich, etc.) eingesetzt. Vor allem im Bereich der Cockpittüre werden die installierten Überwachungskameras dazu genutzt, Personen zu identifizieren, die das Cockpit betreten möchten. Vor allem bei neueren Flugzeugen führt häufig ein schmaler Gang von einem Eingangsbereich des Flugzeugs zum Cockpit. Daher sind in vielen neueren Flugzeugtypen wie z.B. dem Airbus 380 oder dem Airbus 350 zur Überwachung dieses sicherheitsrelevanten Bereichs vor dem Cockpit drei oder mehrere Kameras installiert - beispielsweise eine Kamera direkt über der Cockpittüre und zwei Kameras im Bereich der Flugzeugtüren, von welchen tote Winkel abgedeckt werden, die von der Kamera über den Cockpittüre nicht erfasst werden.

Um z.B. den gesamten Bereich vor dem Cockpit überwachen zu können, werden üblicherweise Überwachungskameras mit einem großen Blick- oder Bildwinkel benötigt. Dabei wird in der Fotografie derjenige Winkel als Blick- oder Bildwinkel einer Kamera bzw. eines Objektivs im Gegenstandsraum verstanden, welcher durch die Ränder des Aufnahmeformats begrenzt wird. Bei einem üblichen rechteckigen Aufnahmeformat ist in der Regel mit Blick- oder Bildwinkel der zur Bilddiagonale gehörende Wert gemeint. Dieser kann maximal 180° betragen, wobei es z.B. Objektive gibt, welche darüberhinausgehende Bildwinkel erreichen können. Von diesen werden aber keine kollinearen Abbildungen - d.h. gerade Linien werden gekrümmt bzw. verzerrt dargestellt - mehr erzeugt. Objektive, von welche Abbildungen mit einem natürlichen Eindruck einer Szene erzeugt werden bzw. welche mit einem Bildwinkel (z.B. von ca. 40° bis 55°) dem menschlichen Auge entsprechenden Bildwinkel arbeiten, werden als Normalobjektive bezeichnet. So genannte Weitwinkelobjektive weisen einen größeren Bildwinkel (z.B. von ca. 60° bis ca. 120°) sowie eine kürzere Brennweite als Normalobjektive auf, so genannte Teleobjektive einen wesentlich kleineren.

Um auch bei Dunkelheit oder bei Nachflügen einen zuverlässigen Einsatz der Überwachungskameras zu gewährleisten, ist zusätzlich eine Infrarotbeleuchtung vorgesehen wie beispielsweise in der Schrift DE 103 60 761 A1 dargestellt. Durch die Infrarotbeleuchtung wird ein Aufnahmebereich bzw. der von der jeweiligen Kamera zu überwachende Bereich entsprechend ausgeleuchtet. Für eine gute Überwachung müssen von den Bildaufnahmen von sicherheitsrelevanten Bereichen in einem Flugzeug, welche von einer Überwachungskamera geliefert werden, üblicherweise ein umfassendes, natürliches und realitätsnahes Bild einer Situation im zu überwachenden Bereich wie z.B. vor der Cockpittüre geliefert werden. Das bedeutet, eine perspektivische Verzerrung der Bildaufnahmen muss für eine einwandfreie, schnelle und sichere Identifikation von Personen und/oder Gegenständen möglichst gering sein. Insbesondere da Bildaufnahmen von in einem Flugzeug zu Verfügung stehenden Anzeigegeräten nur unverändert dargestellt werden können, müssen die Bildaufnahmen z.B. bereits eine gute Bildqualität ohne große Verzerrungen aufweisen. Daher werden beispielsweise in für Flugzeuge entwickelten Überwachungskameras insbesondere Weitwinkelobjektive eingesetzt, um die Anforderungen an die Bildqualität (möglichst geringe Verzerrung, etc.) zu erfüllen. Von einer derartigen Kamera wird z.B. eine Bildaufnahme geliefert, welche sofort auf den im Flugzeug verfügbaren Anzeigegeräten direkt angezeigt werden kann, und welche für eine Beurteilung der Situation in einem zu überwachenden Bereich bzw. zur Identifikation einer Person geeignet ist.

Allerdings weisen derartige Überwachungskameras den Nachteil auf, dass für eine Überwachung eines vorgegebenen Bereichs im Flugzeug wie z.B. dem Bereich vor der Cockpittüre mehrere Kameras mit unterschiedlichen Blickrichtungen installiert werden müssen. Durch die unterschiedlichen räumlichen Gegebenheiten der unterschiedlichen zu überwachenden Bereiche bzw. des zu überwachenden Bereichs vor der Cockpittüre haben die eingesetzten Kameras an die jeweilige Position angepasste Einbaulagen. So werden beispielsweise beim Flugzeugtyp Airbus 350 die Kameras bei den Flugzeugtüren - bedingt durch den runden Rumpfquerschnitt des Flugzeugs - schräg eingebaut mit einer geraden Blickrichtung aus der Kamera heraus. Die Kamera vor der Cockpittüre ist z.B. direkt über Cockpittüre mit einer schräg nach unten geneigten Blickrichtung eingebaut, welche durch bewegliche Teile in diesem Bereich bedingt ist.

Ein möglicher Aufbau einer für ein Flugzeug geeigneten Überwachungskamera sieht beispielsweise eine mechanische Konstruktion vor, bei welcher ein Kamerateil, welcher Bildsensor und Optik bzw. Objektiv umfasst, in zwei unterschiedliche Blickrichtungen in ein Kameragehäuse eingebaut werden kann. Zusätzlich ist auf diesem schwenkbaren Teil auch die Infrarotbeleuchtung (z.B. in Form von Infrarot-Leuchtdioden) angebracht. Diese ist beispielsweise mit einer Streulinse, von welcher die Strahlung hauptsächlich zur Seite gelenkt wird, versehen, um für eine gleichmäßige Ausleuchtung zu sorgen, ohne eine Person direkt anzustrahlen. Das bedeutet, die Überwachungskamera für den Eingangs- bzw. Cockpitbereich eines Flugzeugs wie z.B. einen Airbus 350 oder 380 kann beispielsweise bei der Fertigung je nach Einsatzposition (z.B. über der Cockpittür oder im Eingangsbereich) unterschiedlich zusammengebaut werden. Der Kamerateil mit Optik, Bildsensor und Infrarotbeleuchtung wird dabei entsprechend einer benötigten Blickrichtung in das Kameragehäuse eingebaut. Damit gibt es z.B. für die Überwachung von sicherheitsrelevanten Bereichen in einem Flugzeug unterschiedliche Kameratypen mit verschiedenen Typenbezeichnungen/-nummern.

Das weist den Nachteil auf, dass zumindest einen passende Kamera für jede Einsatzposition als Ersatzgerät beispielsweise für eine Wartung bzw. für einen Austausch verfügbar sein muss. Dadurch kommt es zu erhöhten Kosten für Wartung und Lagerhaltung. Weiterhin wird aufgrund der mechanischen unterschiedlichen Einbaubarkeit bzw. Verstellmöglichkeit des Kamerateils im Kameragehäuse relativ viel Platz benötigt. Die Kameragehäuse sind daher relativ groß ausgestaltet und können nur beschränkt im Flugzeug (z.B. in anderen Bereichen wie dem Passagierraum) eingesetzt werden.

### Darstellung der Erfindung

Der Erfindung liegt daher die Aufgabe zugrunde, eine Überwachungskamera sowie ein zugehöriges Verfahren zum Bearbeiten von Bildaufnahmen anzugeben, welche auf einfache und kostengünstige Weise an unterschiedlichen Einsatzorten bzw. für unterschiedliche Überwachungsbereich in einem Flugzeug nutzbar sind, und von welchen optisch gut Bildaufnahmen der zu überwachenden Bereiche mit einer möglichst geringen Verzerrung geliefert werden.

Diese Aufgabe wird durch ein Überwachungskamera sowie ein zugehöriges Verfahren zum Bearbeiten von elektronischen Bildaufnahmen der eingangs genannten Art mit den Merkmalen gemäß den unabhängigen Patentansprüchen gelöst. Vorteilhafte Ausführungsformen der vorliegenden Erfindung sind in den abhängigen Ansprüchen beschrieben.

Erfindungsgemäß erfolgt die Lösung der Aufgabe mit einer Überwachungskamera der eingangs angegebenen Art, welche zumindest aus einem Objektiv, einer Bildsensoreinheit, einer Infrarotbeleuchtung sowie einer Verarbeitungseinheit besteht. Das Objektiv weist dabei eine großen bzw. derart großen Bildwinkel auf, dass eine Schnittmenge an notwendigen Blickwinkeln bzw. Bildwinkeln für alle möglichen Einsatzszenarien in einem Flugzeug (z.B. Überwachung des Passagierbereichs, Überwachung des Eingangsbereichs des Flugzeugs, Überwachung des Bereichs vor der Cockpittüre, etc.) damit abgedeckt werden können. Mit der Bildsensoreinheit werden elektronische Bildaufnahmen des jeweils vorgegebenen Überwachungsbereichs aufgenommen. Die Infrarotbeleuchtung, durch welche ein gesamter Aufnahmebereich ausgeleuchtet wird, umfasst zumindest Infrarot-Leuchtdioden, welche ohne Einschränkung des Bildwinkels des Objektivs um dieses angeordnet sind, sowie eine Steuerung zur Einstellung einer Strahlungsintensität der Infrarot-Leuchtdioden. Weiterhin werden von der Verarbeitungseinheit automatisiert elektronische Bildaufnahmen der Bildsensoreinheit für eine unmittelbare Anzeige auf zumindest einer im Flugzeug verfügbaren Anzeigeeinheit bearbeitet.

Der Hauptaspekt der erfindungsgemäß vorgeschlagenen Überwachungskamera besteht vor allem darin, dass ein Objektiv mit großem Bildwinkel - idealerweise einem Bildwinkel, welcher größer ist als ein Bildwinkel eines üblichen Weitwinkel- gegebenenfalls eines Superweitwinkelobjektivs - eingesetzt wird. Mit diesem Objektiv kann ein großer, vorgegebener Überwachungsbereich bzw. eine Schnittmenge von notwendigen Blick- bzw. Bildwinkeln an möglichen Einsatzpositionen bzw. - möglicher Einsatzszenarien mit einer mechanischen Blickrichtung der Kamera abgedeckt werden. Das heißt, es wird ein möglicher Sichtbereich gegenüber Überwachungskameras mit z.B. Weitwinkelobjektiven erhöht. Weiterhin umfasst die erfindungsgemäße Überwachungskamera eine Bildsensoreinheit und eine Infrarotbeleuchtung, von welcher der gesamte, mögliche Aufnahmebereich ausgeleuchtet wird - ohne den Bildwinkel des Objektivs einzuschränken - und deren Beleuchtungsintensität steuerbar ist. Mit der Verarbeitungseinheit können dann die erstellten Bildaufnahmen derart bearbeitet werden, dass eine direkte und unmittelbare Anzeige auf im Flugzeug verfügbaren Anzeigeeinheiten möglich ist.

Die erfindungsgemäße Überwachungskamera ist flexibel an unterschiedlichen Einsatzpositionen einsetzbar. Es bedarf damit keiner Lagerhaltung von unterschiedlichen Kameratypen für unterschiedliche Einsatzpositionen im Flugzeug, wodurch z.B. Kosten für die Lagerhaltung an Reparaturstützpunkten für das Flugzeug reduziert werden. Weiterhin kann die erfindungsgemäße Überwachungskamera auch an neuen Einbauorten zum Einsatz kommen. So kann diese Überwachungskamera beispielsweise zur Überwachung des Eingangsbereichs des Flugzeugs an der Decke (z.B. in der Mitte des Ganges mit Blickrichtung Boden) angebracht werden. Damit können beispielsweise ebenfalls Kosten (für z.B. Montage und Wartung) reduziert werden, weil z.B. eine derartige Montage einer erfindungsgemäße Überwachungskamera für eine Überwachung dieses Bereichs ausreicht anstatt z.B. eine Montage von zumindest zwei Kameras (mit gerader Blickrichtung und Weitwinkelobjektiv) bei der jeweiligen Flugzeugtür. Weiterhin weist die erfindungsgemäße Überwachungskamera durch die Verarbeitungseinheit, welche in die Kamera direkt integriert oder als zur Kamera gehörender unabhängiger, externer Konverter ausgeführt sein kann, eine verbesserte optische Qualität auf - auch im Vergleich zur Verwendung von Weitwinkelobjektiven. Durch die Verarbeitungseinheit können bereits relativ kleine bzw. geringe vorhandene Verzerrungen korrigiert werden.

Eine zweckmäßige Weiterbildung der erfindungsgemäßen Überwachungskamera sieht vor, dass eine Strahlungsrichtung der Infrarot-Leuchtdioden der Infrarotbeleuchtung gegenüber einer optischen Achse des Objektivs nach außen geneigt ausgerichtet ist. Idealerweise beträgt eine gegenüber der optischen Achse des Objektivs nach außen gerichtete Neigung einen Winkel von 45°. Diese Anordnung hat den Vorteil, dass damit auf einfache Weise - auch bei einem Objektiv mit sehr großem Bildwinkel (z.B. mit einem Bildwinkel von 180°) der gesamte Sichtbereich des Objektivs ausgeleuchtet wird.

Weiterhin ist es von Vorteil, wenn die Strahlungsintensität der Infrarot-Leuchtdioden der Infrarotbeleuchtung mittels der Steuerung und mit Hilfe einer Auswertung von Daten einer Bildsteuerung der Bildsensoreinheit einzeln ansteuerbar ist. Als Daten der Bildsteuerung der Bildsensoreinheit werden beispielsweise Belichtungszeit, Empfindlichkeit der Bildsensoreinheit und/oder ein Histogramm einer jeweiligen Bildaufnahme für die Auswertung herangezogen. Durch eine selbständige Steuerung der Strahlungsintensität der einzelnen Infrarot-Leuchtdioden der Infrarotbeleuchtung kann die Beleuchtung einer Bildaufnahme von der erfindungsgemäßen Überwachungskamera reguliert und entsprechend angepasst werden. Dazu wird z.B. bei der Installation der Überwachungskamera die Infrarotbeleuchtung bzw. jede einzelne Leuchtdiode konfiguriert, ob von ihr eine direkte oder indirekte Beleuchtung erzeugt wird. Während des Betriebs der Überwachungskamera kann dann mit Hilfe dieser Information die Intensität der einzelnen Leuchtdioden selbständig geregelt werden. Dazu werden dann Daten der automatischen Bildsteuerung herangezogen wie z.B. Belichtungszeit, Sensorempfindlichkeit und/oder das Histogramm, von welchem Aufschluss über einen Über- oder Unterbelichtung in der Bildaufnahme geliefert wird. Entsprechend einer Auswertung dieser Daten kann dann die Strahlungsintensität aller Leuchtdiode oder einzelner Leuchtdioden (z.B. direkte oder indirekt beleuchtende LEDs) gesteigert oder verringert werden.

Es ist weiterhin günstig, wenn bei der erfindungsgemäßen Überwachungskamera als Objektiv mit großem Bildwinkel ein Objektiv mit einem Bildwinkel von zumindest 150°, insbesondere ein so genanntes Fischaugenobjektiv, eingesetzt wird. Durch den Einsatz eines derartigen Objektivs - insbesondere eine so genannten Fischaugenobjektivs, welches einen Bild- oder (diagonalen) Blickwinkel von 180° (und gegebenenfalls auch mehr) aufweist, können auf einfache Weise mit einer mechanischen Blickrichtung der erfindungsgemäßen Überwachungskamera (meist senkrecht aus der Kamera heraus) die unterschiedlichen Anforderungen der einzelnen Einbaupositionen abgedeckt werden bzw. auch neue und gegebenenfalls günstigere Einbaupositionen genutzt werden. Im Gegensatz zu Nicht-Fischaugenobjektiven, von denen eine senkrecht zur optischen Achse stehenden Objektebenen proportional abgebildet wird, wird von einem Fischaugenobjektiv eine Hemisphäre oder mehr, mit einer deutlichen, aber nicht übermäßigen Verzerrung auf der Bildebene abgebildet. Diese Verzerrungen werden auf einfache Weise mit Hilfe der Verarbeitungseinheit der erfindungsgemäßen Überwachungskamera ausgeglichen.

Idealerweise ist die Überwachungskamera in einem einbaubaren Gehäuse untergebracht, wobei die Infrarotbeleuchtung bzw. die Infrarot-Leuchtdioden hinter einer schwarzen, infrarotdurchlässigen Kunststoffabdeckung angeordnet sind. Durch das Gehäuse kann die Überwachungskamera entsprechend in einem Flugzeug eingebaut werden und die Komponenten sind z.B. vor Verschmutzung, etc. geschützt. Insbesondere die Kunststoffabdeckung, von welcher die um das Objektiv angeordnete Infrarotbeleuchtung abgedeckt wird, dient als Schutz vor Verschmutzung und gibt der Überwachungskamera ein entsprechendes Aussehen.

Weiterhin wird die Aufgabe mit einem zur Überwachungskamera zugehörigen Verfahren zur automatisierten Bearbeitung von elektronischen Bildaufnahmen gelöst, welche mit Hilfe des Objektivs aufgenommen und von Bildsensor der Überwachungskamera generiert worden sind. Die Bearbeitung der elektronischen Bildaufnahmen wird unmittelbar nach einer Ausnahme der jeweiligen Bildaufnahme in der Verarbeitungseinheit der erfindungsgemäßen Überwachungskamera durchgeführt. Dabei wird die jeweilige elektronische Bildaufnahme in ein sphärisches Panoramabild projiziert. Dann wird aus dem sphärischen Panoramabild zumindest ein Zielbild für zumindest ein über Konfigurationsdaten definierbares, virtuelles Objektiv errechnet. Das zumindest eine virtuelle Objektiv weist dabei einen geringeren Bildwinkel als das Objektiv der erfindungsgemäßen Überwachungskamera auf, mit welcher die elektronische Bildaufnahme erstellt worden ist. Das zumindest eine errechnete Zielbild wird dann an einen im Flugzeug verfügbare Ausgabeeinheit weitergeleitet und dort ausgegeben.

Die Vorteile des erfindungsgemäßen Verfahrens zur automatisierten Bearbeitung von elektronischen Bildaufnahmen, welche von der erfindungsgemäßen Überwachungskamera erstellt worden sind, liegen vor allem darin, dass dadurch die optische Qualität der erfindungsgemäßen Überwachungskamera verbessert wird, und vorhandene Verzerrungen - insbesondere durch einen Einsatz eines Objektivs mit großem Bildwinkel - korrigiert und ausgeglichen werden. Insbesondere können durch das erfindungsgemäße Verfahren aus den mit der erfindungsgemäßen Überwachungskamera aufgenommenen Bildaufnahmen Zielbilder auf Blickrichtungen unterschiedlicher virtueller Objektive errechnet und damit Ausschnitte aus den Bildaufnahmen genauer betrachtet werden. Durch das erfindungsgemäße Verfahren können auch auf einfache Weise die im Flugzeug verfügbaren Anzeigeeinheiten für einen Anzeige von Bildaufnahmen von zu überwachenden Bereichen genutzt werden.

Es ist von Vorteil, wenn als Konfigurationsdaten für eine Definition des zumindest eine virtuellen Objektivs - zum Berechnen der Zielbilder - eine Blickrichtung, ein Bildwinkel, eine Projektionsart und ein Seitenverhältnis vorgegeben werden. Damit können auf einfache Weise aus dem Bildaufnahmen der erfindungsgemäßen Überwachungskamera verschiedene, entzerrte Zielbilder für bestimmte, unterschiedliche Blickrichtung (z.B. Schwenkung, Neigung, Drehung um die Bildachse, etc.) im vorgegebenen zu überwachenden Bereich ermittelt werden. D.h. es können beispielsweise aus einer Bildaufnahme der erfindungsgemäßen Überwachungskamera, welche an der Decke des Eingangsbereichs des Flugzeugs montiert ist, mittels entsprechender Konfigurationsdaten Zielbilder für z.B. zwei virtuelle Objektive berechnet werden, welche z.B. ein Blickrichtung in die jeweilige Richtung der jeweiligen Flugzeugtür aufweisen. Von diesen Zielbildern wird dann beispielsweise ein rektifizierter Ausschnitt mit einer jeweils unterschiedlichen Blickrichtungen aus der Originalbildaufnahme der erfindungsgemäßen Überwachungskamera gezeigt.

Es ist auch günstig, wenn für ein Erstellen des sphärischen Panoramabildes aus der jeweiligen elektronischen Bildaufnahme eine Position eines Objektivmittelpunkts, eine Größe eines Abbildungskreises sowie der Bildwinkel des Objektivs der erfindungsgemäßen Überwachungskamera berücksichtigt werden. Diese Daten können beispielsweise bei einer Fertigung der Überwachungskamera ermittelt und in der Überwachungskamera (z.B. in der Verarbeitungseinheit oder in einer zugehörigen Speichereinheit) hinterlegt werden. Mit Hilfe dieser Daten kann auf einfache Weise ein mit der erfindungsgemäßen Überwachungskamera aufgenommene Bildaufnahme in ein sphärisches Panoramabild projiziert werden.

Weiterhin ist es für ein Erstellen des sphärischen Panoramabildes aus der jeweiligen elektronischen Bildaufnahme vorteilhaft, wenn bei einer Installation der erfindungsgemäßen Überwachungskamera eine Einbaulage - d.h. eine Drehung um die Sichtachse, eine Neigung um eine horizontale Achse, etc. in der Überwachungskamera hinterlegt bzw. konfiguriert werden.

### Kurzbeschreibung der Zeichnung

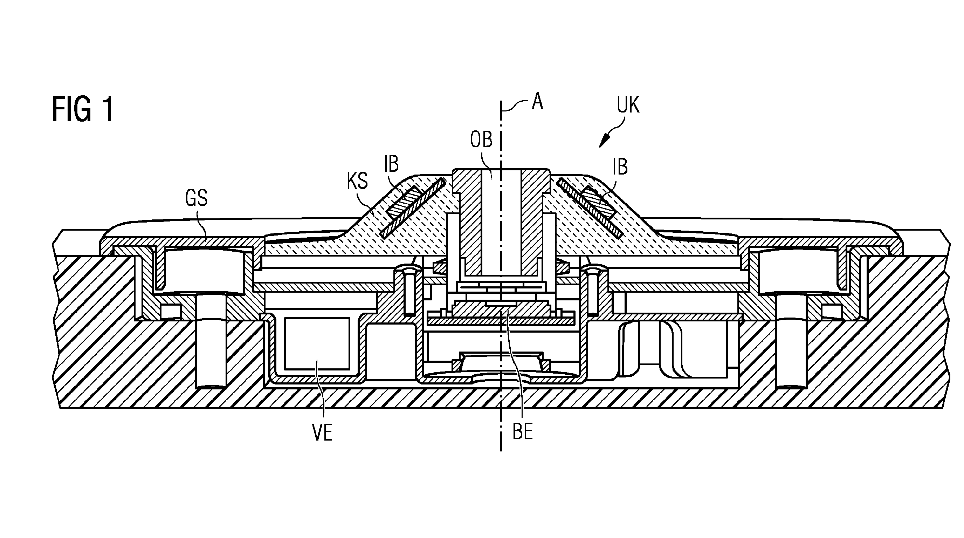

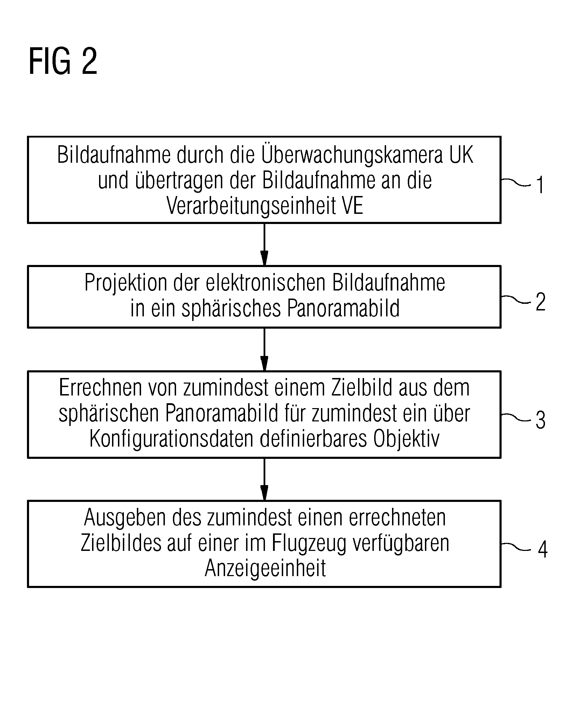

Die Erfindung wird nachfolgend schematisch in beispielhafter Weise anhand der beigefügten Figuren erläutert. Figur 1 zeigt dabei schematisch und beispielhaft einen Aufbau der erfindungsgemäßen Überwachungskamera. Figur 2 zeigt in beispielhafter Weise und schematisch einen Ablauf des Verfahrens zur automatisierten Bearbeitung von Bildaufnahmen der erfindungsgemäßen Überwachungskamera.

### Ausführung der Erfindung

Figur 1 zeigt in schematischer Weise einen beispielhaften Aufbau der erfindungsgemäßen Überwachungskamera UK. Die erfindungsgemäße Überwachungskamera UK weist dabei ein Objektiv OB mit einer optischen Achse A auf. Dieses Objektiv OB hat einen relativ großen Bild- oder Blickwinkel, wodurch eine Schnittmenge aller notwendigen Blickwinkel für eine Überwachung eines vorgegebenen Einsatzbereichs in einem Flugzeug mit derselben mechanischen Blickrichtung (z.B. bedingt durch eine Anbringung im Flugzeug) abgedeckt werden können. Dazu wird beispielsweise als Objektiv OB in der erfindungsgemäßen Überwachungskamera UK ein Objekt mit einem Bildwinkel von zumindest 150° oder ein so genanntes Fischaugenobjektiv, welches einen Bildwinkel von 180° aufweist, eingesetzt. Bei einem Einsatz eines Fischaugenobjektivs als Objektiv OB ist die mechanische Blickrichtung senkrecht auf der Überwachungskamera UK heraus. Ist allerdings in bestimmten Anwendungsfällen der Überwachungskamera UK nicht der gesamte Bereich von Interesse, sondern soll nur ein vorgebbarer Teilbereich im Flugzeug (z.B. Fokussierung auf einen eingeschränkten Flugzeugbereich) überwacht werden, so kann beispielsweise auch ein Objektiv OB mit einem etwas geringeren Bildwinkel (z.B. 150° bis 180°) verwendet werden.

Weiterhin umfasst die Überwachungskamera UK eine Bildsensoreinheit BE zum Generieren von elektronischen Bildaufnahmen des Überwachungsbereichs. Eine Größe und Position der Bildsensoreinheit BE ist dabei derart gewählt, dass die für die Überwachung des vorgegebenen Bereichs notwendigen Blickwinkel der Überwachungskamera UK in allen möglichen Richtungen erreicht werden können. Dabei werden die Größe des Abbildungskreises und der Bildwinkel des Objektivs OB sowie die Größe und Position eines lichtempfindlichen Bereich der Bildsensoreinheit BE - d.h. eine Verschiebung des Mittelpunkts der Bildsensoreinheit BE gegenüber dem Mittelpunkt des Objektivs OB - derart aufeinander abgestimmt, dass eine nutzbare Auflösung der Bildsensoreinheit BE möglichst hoch ist. Dadurch wird eine bessere Bildqualität mit z.B. mehr erkennbaren Details erzielt oder es wird z.B. die Verwendung einer kleineren Bildsensoreinheit ermöglicht.

Zum Erstellen von Bildaufnahmen bei unterschiedlichen Beleuchtungsverhältnissen wie z.B. Nachtaufnahmen, Aufnahmen bei abgeschalteter Flugzeuginnenraumbeleuchtung, etc. ist bei der Überwachungskamera UK eine Infrarotbeleuchtung IB vorgesehen. Mit der Infrarotbeleuchtung IB soll der gesamte mögliche Aufnahmebereich ausgeleuchtet werden - wie z.B. ein möglicher Bereich für einen Bildwinkel von 180° bei Einsatz eines Fischaugenobjektivs als Objektiv OB. Dazu weist die Infrarotbeleuchtung IB Infrarot-Leuchtdioden bzw. Infrarot-LEDs auf, welche um das Objektiv OB z.B. kreisförmig angeordnet sind. Die Infrarot-LEDs sind dabei so weit hinter das Objektiv OB zurückgesetzt, dass der Bildwinkel des Objektivs OB - insbesondere bei Einsatz eines Fischaugenobjektivs - nicht eingeschränkt oder behindert wird. Eine Strahlungsrichtung der Infrarot-LEDs ist dabei nicht parallel zur optischen Achse A des Objektivs ausgerichtet, sondern gegenüber der optischen Achse A des Objektivs OB nach außen geneigt bzw. gedreht - z.B. in einem Winkel von 45°. Das weist den Vorteil auf, dass dadurch der gesamte Aufnahmebereich der Überwachungskamera UK bzw. der gesamte Sichtbereich des Objektivs OB (bei einem Fischaugenobjektiv z.B. 180°) ausgeleuchtet wird.

Weiterhin umfasst die Infrarotbeleuchtung IB eine Steuerung, durch welche die Strahlungsintensität der einzelnen Infrarot-LEDs ansteuerbar und regelbar ist. Dazu kann z.B. bei der Installation der Überwachungskamera UK für den jeweiligen Überwachungsbereich konfiguriert werden, ob eine Infrarot-Leuchtdiode eine direkt oder indirekt beleuchtende Infrarot-Leuchtdiode ist. Mit Hilfe dieser Informationen wird dann während des Betriebs die Strahlungsintensität jeder einzelnen LED mit Hilfe der Steuerung der Infrarotbeleuchtung IB selbständig geregelt. Dazu werden dann Daten einer Bildsteuerung der Bildsensoreinheit BE wie z.B. Belichtungszeit, Empfindlichkeit der Bildsensoreinheit BE, Histogramm der jeweiligen Bildaufnahmen, etc. herangezogen und ausgewertet. Wird bei dieser Auswertung beispielsweise eine Bildaufnahme der Überwachungskamera UK global als zu hell oder zu dunkel eingestuft, so wird die gesamte Strahlungsintensität aller Leuchtdioden der Infrarotbeleuchtung IB entsprechend erhöht oder entsprechend reduziert. Sind jedoch z.B. nur einzelne Bereiche der Bildaufnahme (z.B. in der Mitte der Bildaufnahme, etc.) überbelichtet, so wird beispielsweise die Strahlungsintensität der direkt beleuchtenden Leuchtdioden reduziert. Sind bestimmte Bereiche der Bildaufnahme wie z.B. ein Mittelbereich zu dunkel, so wird die Strahlungsintensität der direkt beleuchtenden Leuchtdioden z.B. erhöht. Wenn beispielsweise eine globale Änderung der Strahlungsintensität - d.h. eine Änderung der Strahlungsintensität aller LEDs - notwendig ist und die Strahlungsintensität der direkt beleuchtenden und der indirekt beleuchtenden LEDs nicht gleich ist, so kann dieser Unterschied beispielsweise unter Berücksichtigung von vorangegangenen Änderungen der Strahlungsintensität wieder ausgeglichen werden. Auf diese Weise kann z.B. verhindert werden, dass einen Person, welche z.B. direkt im Bereich der Überwachungskamera (z.B. direkt vor einer Cockpittüre, etc.) steht, von einer direkt beleuchtenden LED direkt bestrahlt wird. Diese LED wird in diesem Fall nur eine geringe Strahlungsintensität aufweisen bzw. nur eine geringe Strahlung abgeben, während beispielsweise von den anderen LEDs z.B. über Wand- und/oder Deckenbereiche für eine indirekte Beleuchtung gesorgt wird.

Weiterhin weist die Überwachungskamera UK einen Verarbeitungseinheit VE auf. Von der Verarbeitungseinheit VE wird ein Verfahren zur automatisierten Bearbeitung der elektronischen Bildaufnahmen für eine unmittelbare Anzeige auf zumindest einer im Flugzeug verfügbaren Anzeigeeinheit durchgeführt. Ein beispielhafter Ablauf dieses Verfahrens ist in schematischer und beispielhafter Weise in Figur 2 dargestellt. Beim Verfahren zur automatisierten Bearbeitung der elektronischen Bildaufnahmen der erfindungsgemäßen Überwachungskamera UK wird in einem ersten Verfahrensschritt 1 eine elektronische Bildaufnahme von der Überwachungskamera UK erstellt. Dabei kann mittels der Steuerung der Infrarotbeleuchtung IB die Ausleuchtung wie beschrieben entsprechend optimiert werden. Dann wird die elektronische Bildaufnahme an die Verarbeitungseinheit VE übertragen, welche in die Überwachungskamera UK integriert oder funktional gleichwertig - in einem unabhängigen, externen (aber funktionell zur Überwachungskamera UK gehörenden) Konverter ausgeführt sein kann.

In einem zweiten Verfahrensschritt 2 wird dann die elektronische Bildaufnahme in ein zugehöriges sphärisches Panoramabild projiziert wird, wobei eine so genannte Rektangularprojektion eingesetzt wird. Als Rektangularprojektion wird z.B. in der mathematischen Kartografie eine abstandstreue Zylinderprojektion in normaler Lage bezeichnet. Dabei müssen Daten wie eine Position eines Objektivmittelpunktes, eine Größe des Abbildungskreises in der elektronischen Bildaufnahme und der Bildwinkel des Objektivs OB der Überwachungskamera UK berücksichtigt werden. Diese Daten können beispielsweise bei der Fertigung der Überwachungskamera UK ermittelt und dann in dieser gespeichert werden. Weiterhin muss für das Erstellen des sphärischen Panoramabildes eine Einbaulage der Überwachungskamera UK- d.h. eine Drehung um eine Sichtachse und eine Neigung um eine horizontale Achse - bekannt sein. Die Daten der Einbaulage können dabei bei einer Installation der Überwachungskamera UK im jeweiligen Überwachungsbereich in der Überwachungskamera UK hinterlegt und/oder konfiguriert werden. Damit stehen auch Daten über die Einbaulage der Überwachungskamera UK für die Projektion der elektronischen Bildaufnahme in das zugehörige sphärische Panoramabild zur Verfügung.

Im dritten Verfahrensschritt 3 wird dann zumindest ein Zielbild für zumindest ein virtuelles Objektiv, welches über Konfigurationsdaten definierbar ist, aus dem sphärischen Panoramabild errechnet. Das virtuelle Objektiv weist einen geringeren Bildwinkel als das tatsächliche Objektiv OB der Überwachungskamera UK, mit welchem die zugrundeliegende Bildaufnahme erstellt worden ist. In dem errechneten Zielbild ist damit z.B. ein spezieller Blickwinkel auf den zu überwachenden Bereich dargestellt, welcher vom Objektiv OB abgedeckt wird. Als Konfigurationsdaten für das jeweilige virtuelle Objektiv zur Errechnung des zumindest einen Zielbildes können beispielsweise Blickrichtung (z.B. Schwenkung, Neigung, Drehung um die Blickachse, etc.), der Bildwinkel, eine Projektionsart (z.B. entzerrt, zylindrisches Panorama, etc.) und ein Seitenverhältnis vorgegeben werden. Diese Konfigurationsdaten können beispielsweise in der Verarbeitungseinheit VE konfiguriert sein. Es kann aber auch die Möglichkeit vorgesehen sein, die Konfigurationsdaten im Betrieb dynamisch zu ändern. Dazu wird z.B. für jeden Bildpunkt eines Zielbildes eine Position des entsprechenden Bildpunktes in der entsprechenden zugehörigen Bildaufnahme der Überwachungskamera UK berechnet und zwischengespeichert. D.h. mit Hilfe der Verarbeitungseinheit VE können automatisch und annähernd in Echtzeit unter Zuhilfenahme der Konfigurationsdaten entsprechende Zielbilder errechnet werden.

In einem vierten Verfahrensschritt 4 wird dann das zumindest eine auf Basis der elektronischen Bildaufnahme errechnete Zielbild an eine im Flugzeug verfügbare Anzeigeeinheit weitergeleitet und dort ausgegeben. Damit können Bilder der Überwachungskamera UK des zu überwachenden Bereichs mit unterschiedlichen Bildwinkeln bzw. aus Blickwinkeln mit einer relativ geringen Verzerrung angezeigt werden. So können beispielsweise mit einer auf der Decke montierten erfindungsgemäßen Überwachungskamera UK mit einer Blickrichtung in Richtung Flugzeugboden Zielbilder abgeleitet werden, welche Bildaufnahmen von zwei an den jeweiligen Seitenwänden montierten Kameras (z.B. mit Blickrichtung zur jeweiligen Flugzeugtür) errechnet und ohne große Verzerrungen angezeigt werden.

Weiterhin ist die Überwachungskamera UK zum Schutz und für den Einbau in einem Flugzeug in einem einbaubaren Gehäuse GS angeordnet. Diese Gehäuse GS weist eine schwarze, infrarotdurchlässige Kunststoffabdeckung KS auf, hinter welcher die Infrarot-LEDs der Infrarotbeleuchtung IB angeordnet sind. Durch die Kunststoffabdeckung KS wird die Infrarotbeleuchtung IB vor Umwelteinwirkungen (z.B. Staub, etc.) geschützt und die Überwachungskamera UK erhält dadurch auch ein ansprechendes Aussehen. Dabei ist allerdings der Bereich des Objektivs OB ausgespart, damit das Objektiv OB direkt zugänglich ist und nicht durch Abdeckungsteile KS überdeckt wird. Dadurch entstehen auch keine Einschränkungen des Aufnahmebereichs, Bildwinkels, etc. des Objektivs und gegebenenfalls eine Qualitätsverschlechterung der Bildaufnahmen der Überwachungskamera UK durch die Kunststoffabdeckung KS.

## Patentansprüche

1. Überwachungskamera (UK) für einen Einsatz in Flugzeugen, von welcher ein großer, vorgegebener Überwachungsbereich bei unterschiedlichen Beleuchtungsverhältnissen aufnehmbar ist, zumindest bestehend aus:
- einem Objektiv (OB) mit großem Bildwinkel,
- einer Bildsensoreinheit (BE) zum Generieren von elektronischen Bildaufnahmen des Überwachungsbereichs
- einer Infrarotbeleuchtung (IB) zumindest umfassend Infrarot-Leuchtdioden, welche derart um das Objektiv (OB) angeordnet sind, dass eine Einschränkung des Bildwinkels des Objektivs (OB) verhindert wird, und eine Steuerung zur Einstellung einer Strahlungsintensität der Infrarot-Leuchtdioden,
- einer Verarbeitungseinheit (VE) zur automatisierten Bearbeitung der elektronischen Bildaufnahmen für eine unmittelbare Anzeige auf zumindest einer in einem Flugzeug verfügbaren Anzeigeeinheit.

2. Überwachungskamera (UK) nach Anspruch 1, **dadurch gekennzeichnet, dass** eine Strahlungsrichtung der Infrarot-Leuchtdioden der Infrarotbeleuchtung (IB) gegenüber einer optischen Achse (A) des Objektivs (OB) nach außen geneigt ausgerichtet ist.

3. Überwachungskamera (UK) nach einem der Ansprüche 1 bis 2, **dadurch gekennzeichnet, dass** die Strahlungsintensität der Infrarot-Leuchtdioden mittels der Steuerung und mit Hilfe einer Auswertung von Daten einer Bildsteuerung der Bildsensoreinheit (BE), insbesondere Belichtungszeit, Empfindlichkeit der Bildsensoreinheit (BE) und/oder Histogramm einzeln ansteuerbar ist.

4. Überwachungskamera (UK) nach einem der Ansprüche 1 bis 3, **dadurch gekennzeichnet, dass** als Objektiv (OB) mit großen Bildwinkel ein Objektiv mit einem Bildwinkel von zumindest 150°, insbesondere ein so genanntes Fischaugenobjektiv, einsetzbar ist.

5. Überwachungskamera (UK) nach einem der Ansprüche 1 bis 4, **dadurch gekennzeichnet, dass** ein einbaubares Gehäuse (GS) vorgesehen ist, wobei die Infrarot-Leuchtdioden der Infrarotbeleuchtung (IB) hinter einen schwarzen infrarotdurchlässigen Kunststoffabdeckung (KS) angeordnet sind.

6. Verfahren zur automatisierten Bearbeitung von elektronischen Bildaufnahmen einer Überwachungskamera (UK) nach einem der Ansprüche 1 bis 5, **dadurch gekennzeichnet, dass** die Bearbeitung der elektronischen Bildaufnahmen unmittelbar nach einer Aufnahme von einer Verarbeitungseinheit (VE) der Überwachungskamera (UK) nach einem der Ansprüche 1 bis 5 durchgeführt wird (1), dass dabei eine elektronische Bildaufnahme in ein zugehöriges sphärisches Panoramabild projiziert wird (2), dass dann aus dem sphärischen Panoramabild zumindest ein Zielbild für zumindest ein über Konfigurationsdaten definierbares virtuelles Objektiv, welches einen geringeren Bildwinkel als das Objektiv (OB) der Überwachungskamera (UK) nach einem der Ansprüche 1 bis 5 aufweist, errechnet wird (3), und dass das zumindest eine errechnete Zielbild dann auf zumindest einer im Flugzeug verfügbaren Anzeigeeinheit ausgegeben werden (4).

7. Verfahren nach Anspruch 6, **dadurch gekennzeichnet, dass** als Konfigurationsdaten für das zumindest eine virtuelle Objektiv eine Blickrichtung, ein Bildwinkel, eine Projektionsart und ein Seitenverhältnis vorgegeben werden (3).

8. Verfahren nach einem der Ansprüche 6 bis 7, **dadurch gekennzeichnet, dass** für ein Erstellen des sphärischen Panoramabildes aus der elektronischen Bildaufnahme eine Position eines Objektivmittelpunkts, eine Größe eines Abbildungskreises sowie der Bildwinkel des Objektivs (OB) der Überwachungskamera (UK) nach einem der Ansprüche 1 bis 5 berücksichtigt werden (2).

9. Verfahren nach einem der Ansprüche 6 bis 8, **dadurch gekennzeichnet, dass** bei einer Installation der Überwachungskamera (UK) nach einem der Ansprüche 1 bis 5 eine Einbaulage in der Überwachungskamera (UK) hinterlegt und/oder konfiguriert wird.
